# EUROPEAN PATENT SPECIFICATION

(11) **EP 3 557 288 B1**
(45) Date of publication and mention of the grant of the patent: **28.08.2024**
(21) Application number: 17880918.2
(22) Date of filing: 12.12.2017
(51) Int. Cl.: G01T 1/20

(54) **METHOD OF PRODUCING A PLASTIC SCINTILLATION FIBER**
VERFAHREN ZUR HERSTELLUNG EINER PLASTIK-SZINTILLATIONSFASER
PROCÉDÉ DE PRODUCTION D'UN FIBRE DE SCINTILLATION EN PLASTIQUE

(30) Priority: 15.12.2016 JP 2016243732
(43) Date of publication of application: 23.10.2019
(73) Proprietor: Kuraray Co., Ltd., Kurashiki-shi, Okayama 710-0801 (JP)
(72) Inventor: SHINJI, Osamu, Tainai-shi, Niigata 959-2691 (JP); IWAKAWA, Ryuichi, Tainai-shi, Niigata 959-2691 (JP); SONOBE, Minoru, Tainai-shi, Niigata 959-2691 (JP)
(74) Representative: Müller-Boré & Partner Patentanwälte PartG mbB
(86) International application number: PCT/JP2017/044525
(87) International publication number: WO 2018/110536

(56) References cited:
- WO-A1-2013/179970
- WO-A1-2015/046512
- JP-A- 2000 065 939
- JP-A- 2000 137 122
- JP-A- H09 159 769
- JP-A- H10 300 855
- US-A- 5 588 084
- US-A1- 2015 131 937

## Description

### Technical Field

The present invention relates to methods of producing a plastic scintillating fiber.

### Background Art

Scintillating fibers are optical fibers in which the outer peripheral surface of a core composed of a transparent substrate having scintillating properties is covered with a clad composed of a transparent substrate having a lower refractive index than that of the core, and such scintillating fibers are used for elementary particle detection and general radiation detection. Particularly, plastic scintillating fibers composed of plastics are widely used in the elementary particle physics research applications and the like since they are produced at a low cost and can be easily processed.

As a core substrate of a plastic scintillating fiber, a transparent resin having an aromatic structure, such as a polystyrene that is likely to emit ultraviolet fluorescence under a radiation or the like, is used. Further, one or more organic phosphors are dissolved in the core substrate so as to convert an ultraviolet light emitted by the core substrate under a radiation into a visible light, such as a blue light having a wavelength of about 430 nm or a green light having a wavelength of about 550 nm. In other words, the core substrate of a plastic scintillating fiber is composed of an aromatic transparent polymer in which one or more organic fluorescent agents are dissolved.

Meanwhile, the clad is composed of a polymethyl methacrylate (PMMA), a fluorine-containing low-refractive material, or the like.

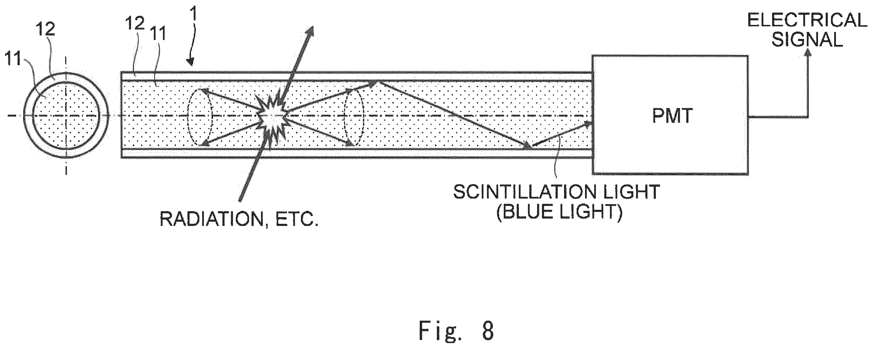

Fig. 8 is a schematic drawing of a detector using a scintillating fiber. As illustrated in Fig. 8, when a charged particle beam, a radiation or the like crosses a scintillating fiber 1, a scintillating light generated inside a core 11 propagates toward the respective ends of the scintillating fiber 1 while repeatedly undergoing total reflection at the core 11-clad 12 interface. The scintillating light guided to one end of the scintillating fiber 1 is detected as an electrical signal by a photomultiplier tube (PMT).

In place of the PMT illustrated in Fig. 8, a semiconductor detector, such as a silicon-photomultiplier (Si-PM) equipped with a silicon-avalanche photodiode (Si-APD), may be used as well. Recently, for example, multi-pixel photon counter (MPPC) arrays in which a large number of small segmented Si-PMs are arranged are widely used. In MPPCs, pixels are each connected to a single scintillating fiber, and scintillating light generated in the respective scintillating fibers can be detected simultaneously.

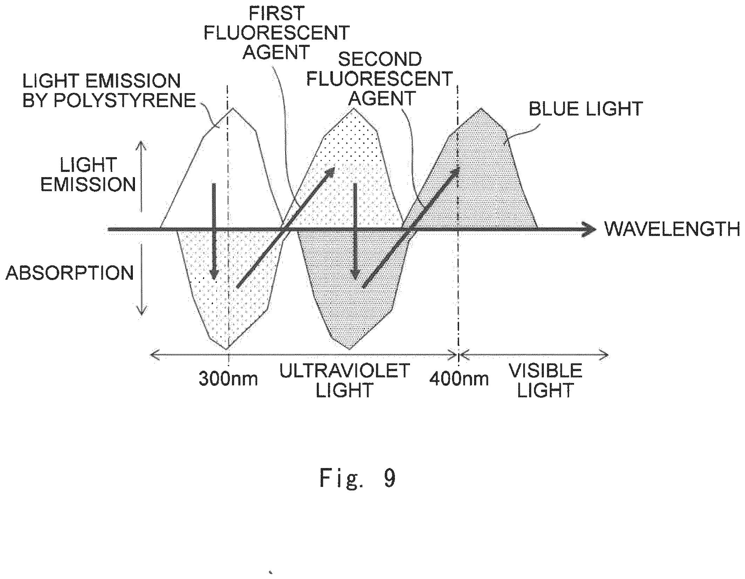

Fig. 9 is a drawing that illustrates the principle of blue light emission inside the core of a scintillating fiber irradiated with a radiation. When the radiation crosses the core composed of a polystyrene, the radiation interacts with the atoms constituting the polystyrene, and an ultraviolet ray having a wavelength of about 300 nm is thereby emitted. In the core, about 1 to 3% by mass of a first fluorescent agent, which absorbs light having a wavelength of about 300 nm and emits a light having a wavelength of about 350 nm to perform wavelength conversion, is dissolved. In addition, in the core, about 0.01 to 0.1% by mass (100 to 1,000 ppm by mass) of a second fluorescent agent, which absorbs wavelengths of about 350 nm and emits a blue light having a wavelength of about 430 nm to perform wavelength conversion, is dissolved as well. The reason why wavelength conversion of an ultraviolet ray emitted as a result of irradiation with a radiation into a blue light is performed in this manner is because the resulting wavelength gives the highest sensitivity in the detection by a PMT, an Si-PM or the like.

It is noted here that the ultraviolet ray emitted from the polystyrene due to the irradiation with a radiation cannot propagate over a long distance in the core since the polystyrene itself absorbs the ultraviolet ray. Therefore, by adding the first fluorescent agent at a high concentration, the ultraviolet ray emitted from the polystyrene is immediately converted into a longer-wavelength light.

As for the second fluorescent agent, by adding it at a lower concentration than the first fluorescent agent, self-absorption where the light emitted by the second fluorescent agent is re-absorbed by the second fluorescent agent itself is suppressed. This self-absorption is caused by an overlap of the absorption and luminescence properties. When the concentration of the second fluorescent agent is excessively high, the wavelength conversion efficiency is reduced due to the self-absorption, and the wavelength of the emitted light deteriorates the transparency due to the self-absorption. Meanwhile, when the concentration of the second fluorescent agent is excessively low, since the light converted by the first fluorescent agent is efficiently absorbed, the wavelength thereof cannot be converted in a longer wavelength.

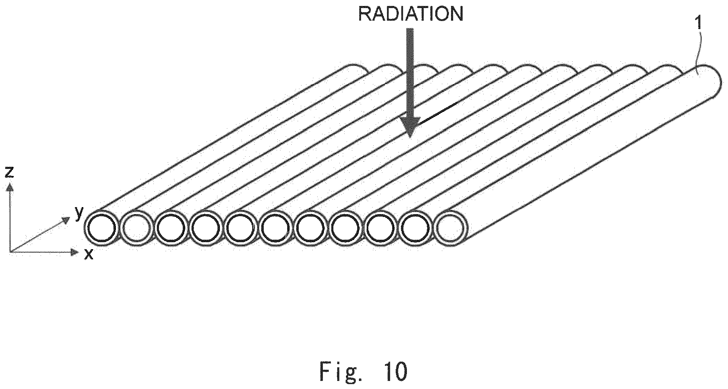

Incidentally, Fig. 10 is a perspective view of parallelly-arranged plural scintillating fibers having a circular cross-section. As illustrated in Fig. 10, a detector using parallelly-arranged plural scintillating fibers 1 having a circular cross-section is known. In Fig. 10, the plural scintillating fibers 1, which extend in the y-axis direction, are arrayed along the x-axis direction. As illustrated in Fig. 10, such a detector is often used in a manner that a radiation crosses therethrough in a direction substantially perpendicular to a plane constituted by the plural scintillating fibers (x-y plane in Fig. 10).

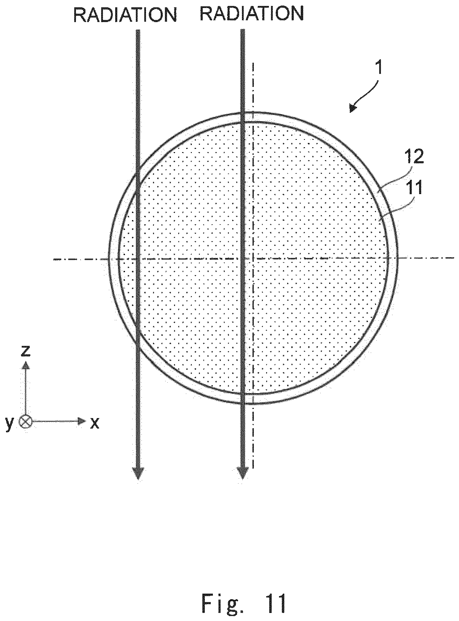

Fig. 11 is a cross-sectional view illustrating a state in which a radiation crosses each scintillating fiber 1 having a circular cross-section. As illustrated in Fig. 11, in the scintillating fiber 1 having a circular cross-section, the crossing distance of a radiation is different between a case where the radiation crosses near the center axis (central part) of the core 11 and a case where the radiation crosses near the outer periphery (outer peripheral part) constituting an interface with the clad 12.

Accordingly, depending on the radiation crossing distance, the light emission amount, namely the number of generated photons, in the core 11 is large when the radiation crosses the central part, or small when the radiation crosses the outer peripheral part. In other words, since the detection sensitivity corresponds to the radiation crossing distance, depending on the case, there is a risk that photons are detected only when the radiation crosses the central part, but not when the radiation crosses the outer peripheral part. Consequently, in such a detector as illustrated in Fig. 10 in which the scintillating fibers 1 having a circular cross-section are arrayed, an insensitive region having no sensitivity may be formed in a part between the scintillating fibers 1 (Patent Literature 1 and 2). Such a variation in the light emission amount depending on the radiation crossing position is not desirable also for a single scintillating fiber.

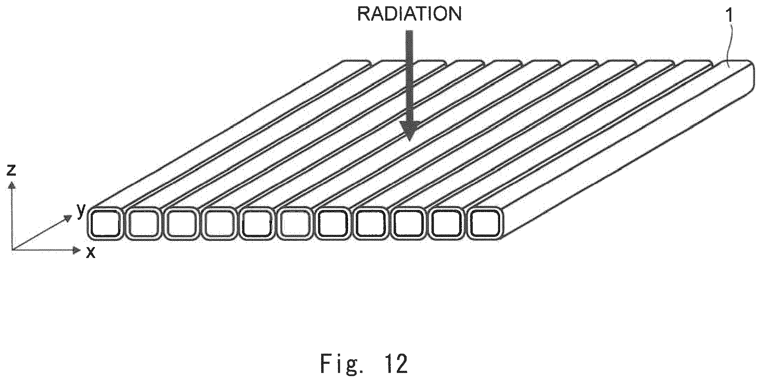

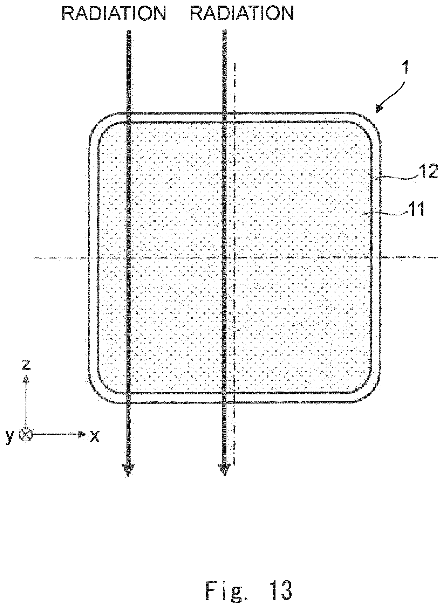

In order to suppress this problem, usually, scintillating fibers having a rectangular cross-section are used as illustrated in Fig. 12. Fig. 12 is a perspective view of parallelly-arranged plural scintillating fibers having a rectangular cross-section. Fig. 13 is a cross-sectional view illustrating a state in which a radiation crosses a scintillating fiber having a rectangular cross-section. As illustrated in Fig. 13, in the scintillating fiber 1 having a rectangular cross-section, the crossing distance is the same both in the central part and the outer peripheral part of the core 11. Accordingly, there is no insensitive region except the clad 12, and this allows the light emission amount inside the core 11 to be the same regardless of the radiation crossing position. For this purpose, a large number of detectors in which the scintillating fibers 1 having a rectangular cross-section are arrayed in a single layer or multiple layers have been put to practical use. When scintillating fibers are arrayed in multiple layers, the scintillating fibers arrayed along the x-axis direction and the scintillating fibers arrayed along the y-axis direction may be alternately laminated.

It is be noted here that, although the right-handed xyz coordinates illustrated in Figs. 10 to 13 correspond to one another among these figures, these coordinates are merely provided for convenience in describing the positional relationship of constituents.

Further, Patent Literature 3 will be discussed in the description of the embodiments of the present invention.

### Citation List

### Patent Literatures

[Patent Literature 1] Japanese Unexamined Patent Application Publication No. S63-129304
[Patent Literature 2] Japanese Unexamined Patent Application Publication No. 2000-137122
[Patent Literature 3] International Patent Publication No. WO 2015/046512

US 5 588 084 A relates to a method of producing a plastic scintillating fiber.

### Summary of Invention

### Technical Problem

However, scintillating fibers having a rectangular cross-section are difficult to produce and are thus expensive as compared to scintillating fibers having a circular cross-section. In addition, an improvement in the accuracy of, for example, the shape of the four corners and the straightness of the four sides is considerably harder than an improvement in the accuracy of the circularity. Accordingly, as optical fibers through which a light is allowed to transmit while repeatedly undergoing total reflection at the core-clad interface, only those having poor optical performance could be obtained. In other words, aggravation of the transmission loss due to unsatisfactory total reflection conditions is more prominent in scintillating fibers having a rectangular cross-section than in scintillating fibers having a circular cross-section. Therefore, there are limitations in the use of scintillating fibers having a rectangular cross-section for an elongated detector or a high-sensitivity detector.

An object of the present invention is to provide a plastic scintillating fiber having a circular cross-section, in which a reduction in light emission amount depending on the radiation crossing position can be suppressed.

### Solution to Problem

A plastic scintillating fiber according to one aspect not covered by the claimed invention is a plastic scintillating fiber having a circular cross-section, the plastic scintillating fiber including: a core which contains a fluorescent agent having ultraviolet absorption and luminescence properties; and a clad which covers an outer peripheral surface of the core and has a lower refractive index than that of the core,
wherein a concentration of the fluorescent agent in the core is distributed such that it increases from a center toward an outer periphery in a cross-section of the core.

Since the concentration of the fluorescent agent in the core is distributed such that it increases from the center toward the outer periphery in a cross-section of the core, a reduction in the light emission amount depending on the radiation crossing position can be suppressed in the plastic scintillating fiber, despite that the plastic scintillating fiber has a circular cross-section.

It is preferred that the concentration of the fluorescent agent be distributed such that it increases discontinuously in two or more steps from the center toward the outer periphery in the cross-section of the core. Alternatively, it is preferred that the concentration of the fluorescent agent be distributed such that it increases continuously from the center toward the outer periphery in the cross-section of the core.

It is also preferred that the clad have a multi-clad structure including: an inner clad; and an outer clad which covers an outer peripheral surface of the inner clad and has a lower refractive index than that of the inner clad. This configuration allows the plastic scintillating fiber to capture and transmit light of a wider angle, so that the scintillating fiber can attain a high luminescence.

A method of producing a plastic scintillating fiber according to another aspect of the present invention is a method of producing a plastic scintillating fiber according to claims 1 and 2.

Since the concentration of the fluorescent agent in the core rod is distributed such that it increases from the center toward the outer periphery in a cross-section of the core rod, a reduction in the light emission amount depending on the radiation crossing position can be suppressed in the resulting plastic scintillating fiber, despite that the plastic scintillating fiber has a circular cross-section.

According to one aspect of the invention, the concentration of the fluorescent agent is distributed such that it increases discontinuously in two or more steps from the center toward the outer periphery in the cross-section of the core rod. Alternatively, the concentration of the fluorescent agent is distributed such that it increases continuously from the center toward the outer periphery in the cross-section of the core rod.

It is also preferred that the clad pipe be constituted by: an inner clad pipe; and an outer clad pipe which covers an outer peripheral surface of the inner clad pipe and is composed of a resin having a lower refractive index than that of the inner clad pipe. This configuration allows the resulting plastic scintillating fiber to capture and transmit light of a wider angle, so that a highly luminescent scintillating fiber can be obtained.

### Advantageous Effects of Invention

According to the present invention, a plastic scintillating fiber having a circular cross-section, in which a reduction in the light emission amount depending on the radiation crossing position can be suppressed, can be provided.

### Brief Description of the Drawings

Fig. 1 is a cross-sectional view illustrating an example of the scintillating fiber according to one embodiment;
Fig. 2 is a cross-sectional view illustrating an example of the scintillating fiber according to another embodiment;
Fig. 3 is a cross-sectional view illustrating an example of the scintillating fiber according to yet another embodiment;
Fig. 4 is a graph showing the concentration distribution of a fluorescent agent in the scintillating fibers according to Example 1 and Comparative Example;
Fig. 5 is a block diagram of a measurement system for measuring the changes in the light emission amount depending on the position in the fiber radial direction;
Fig. 6 is a cross-sectional view of a stage equipped with a scintillating fiber;
Fig. 7 is a graph showing the results of measuring the changes in the light emission amount depending on the position in the fiber radial direction;
Fig. 8 is a schematic drawing of a detector using a scintillating fiber;
Fig. 9 is a drawing that illustrates the principle of blue light emission inside the core of a scintillating fiber irradiated with a radiation;
Fig. 10 is a perspective view of parallelly-arranged plural scintillating fibers having a circular cross-section;
Fig. 11 is a cross-sectional view illustrating a state in which a radiation crosses a scintillating fiber having a circular cross-section;
Fig. 12 is a perspective view of parallelly-arranged plural scintillating fibers having a rectangular cross-section; and
Fig. 13 is a cross-sectional view illustrating a state in which a radiation crosses a scintillating fiber having a rectangular cross-section.

### Description of Embodiments

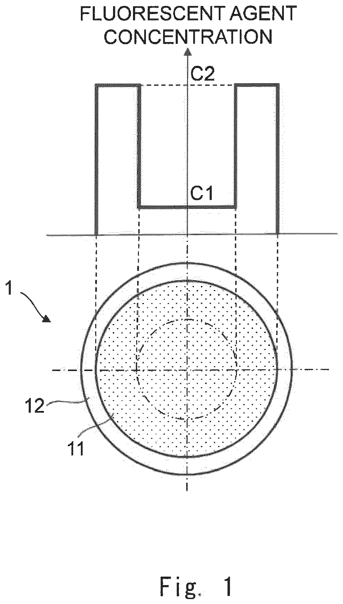

Scintillating fibers according to embodiments of the present invention will now be described referring to Figs. 1 to 3. Figs. 1 to 3 are cross-sectional views illustrating examples of the scintillating fibers according to the embodiments. As illustrated in Figs. 1 to 3, scintillating fibers 1 according to the present embodiments are each a plastic scintillating fiber including: a core 11; and a clad 12 which covers the outer peripheral surface of the core 11.

The core 11 is composed of a transparent resin that contains a fluorescent agent having ultraviolet absorption and luminescence properties. As a core substrate, for example, a styrene-based resin that is inexpensive and easy to handle is used. The details of the core substrate and the fluorescent agent that constitute the core 11 will be described below.

The clad 12 which covers the outer peripheral surface of the core 11 is composed of a transparent resin having a lower refractive index than that of the core 11. The clad 12 has an outer diameter of, for example, 0.2 to 2.0 mm. A clad substrate constituting the clad 12 will be described below.

Using the clad 12 as an inner clad, an outer clad having a lower refractive index may be arranged on the outer peripheral surface of the clad 12 to form a multi-clad structure. Such a multi-clad structure enables to capture and transmit light of a wider angle, so that the detection sensitivity is improved. An outer clad substrate constituting the outer clad will be described below.

### <Concentration Distribution of Fluorescent Agent Having Ultraviolet Absorption and Luminescence Properties>

Figs. 1 to 3 also illustrate the concentration distributions of the fluorescent agent having ultraviolet absorption and luminescence properties that is doped into the core 11 (hereinafter, this fluorescent agent is simply referred to as "fluorescent agent"). In conventional scintillating fibers, the concentration of a fluorescent agent in the core is uniform; however, as illustrated in Figs. 1 to 3, in the scintillating fibers 1 according to the present embodiments, the concentration of the fluorescent agent in the core 11 is distributed such that it increases from the center toward the outer periphery in a cross-section of the core 11. Figs. 1 to 3 will now each be described.

In the scintillating fiber 1 illustrated in Fig. 1, the concentration of the fluorescent agent increases discontinuously from the central part toward the outer peripheral part in two steps, with the central part having a low concentration C1 and the outer peripheral part having a high concentration C2.

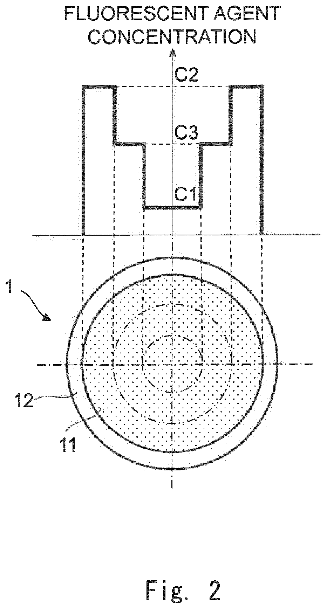

In the scintillating fiber 1 illustrated in Fig. 2, a part having an intermediate concentration C3 is arranged between the central part having the low concentration C1 and the outer peripheral part having the high concentration C2, and the concentration of the fluorescent agent is thereby allowed to increase discontinuously in three steps from the central part toward the outer peripheral part.

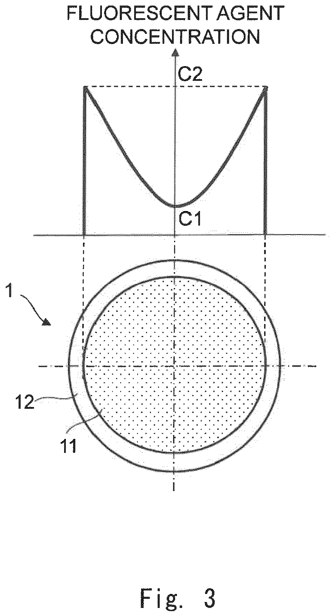

In the scintillating fiber 1 illustrated in Fig. 3, the concentration of the fluorescent agent increases smoothly and continuously from the low concentration C1 in the central part to the high concentration C2 in the outer peripheral part.

As described referring to Fig. 11, in a scintillating fiber, the probability that an ultraviolet ray is released by a reaction between a core substrate and a radiation is proportional to the crossing distance, which is the distance of the core substrate through which the radiation has crossed. Accordingly, the crossing distance is short in the outer peripheral part of the core, and the light emission amount is thus reduced in conventional scintillating fibers in which the concentration of the fluorescent agent in the core is uniform.

On the other hand, the scintillating fibers 1 according to the present embodiments illustrated in Figs. 1 to 3 each have such a concentration distribution that the concentration of the fluorescent agent is high in the outer peripheral part where the radiation crossing distance is short. Accordingly, a reduction in the light emission amount in the outer peripheral part of each scintillating fiber 1 can be suppressed. In other words, a reduction in the light emission amount depending on the radiation crossing position can be suppressed even in a scintillating fiber having a circular cross-section.

Therefore, in a detector in which the scintillating fibers 1 according to any of the present embodiments are arrayed as illustrated in Fig. 10, the formation of an insensitive region in a part between the scintillating fibers 1 can be suppressed.

The scintillating fibers 1 will now be described in more detail. The scintillating fibers 1 according to the present embodiments shown in Figs. 1 to 3 each have a rotationally-symmetrical concentration distribution such that the concentration of the fluorescent agent is low in the central part of the core 11 while the concentration of the fluorescent is high in the outer peripheral part of the core 11. Accordingly, when a radiation crosses the central part of the core 11, the total crossing distance is long; however, the crossing distance in the outer peripheral part having a high fluorescent agent concentration is short, while the crossing distance in the central part having a low fluorescent agent concentration is long. On the other hand, when a radiation crosses the outer peripheral part of the core 11, the total crossing distance is short; however, the crossing distance in the outer peripheral part having a high fluorescent agent concentration is long.

Therefore, a reduction in the light emission amount in a case where a radiation crosses the outer peripheral part of the core 11 as compared to a case where a radiation crosses the central part of the core 11 can be suppressed. By optimizing the concentration distribution of the fluorescent agent inside the core 11, the light emission amount can be made uniform regardless of whether a radiation crosses the central part or the outer peripheral part of the core 11.

The light emission amount is proportional to the crossing distance; however, the light emission amount is not necessarily proportional to the fluorescent agent concentration since it is saturated in a high-concentration region. Accordingly, in order to improve the uniformity of the light emission amount in the core, it is preferred to check the dependency of the light emission amount on the fluorescent agent concentration through actual trials.

For example, with regard to the concentration distribution of the fluorescent agent, the concentration of the fluorescent agent in the outer periphery of the core can be set to be not less than 1.5 times, not less than 2 times, not less than 3 times, not less than 5 times, or not less than 10 times of the concentration of the fluorescent agent in the center of the core at a cross-section.

In cases where two types of fluorescent agents, which are a first fluorescent agent and a second fluorescent agent, are used in the scintillating fiber, a concentration distribution is imparted to both of these fluorescent agents, or a concentration distribution is imparted to only one of these fluorescent agents. The role of the fluorescent agents in the scintillating fiber is to convert the wavelength of an ultraviolet light, which is emitted by the core substrate due to excitation with a radiation, into a longer wavelength in a stepwise and sequential manner. Therefore, the effects of the present invention can be attained even when, for example, only the first fluorescent agent or the second fluorescent agent is imparted with a concentration distribution.

### <Core Substrate>

The core substrate is required to be a scintillator, and it is thus important that the core substrate be a polymer having an aromatic ring such as a benzene ring. In other words, a polymer obtained by polymerizing any one monomer of the monomer group consisting of benzyl methacrylate, phenyl methacrylate, cyclohexyl methacrylate, chlorobenzyl methacrylate, 1-phenylethyl methacrylate, 1,2-diphenylethyl methacrylate, diphenylethyl methacrylate, furfuryl methacrylate, 1-phenylcyclohexyl methacrylate, pentachlorophenyl methacrylate, pentabromophenyl methacrylate, 1-naphthyl methacrylate, 2-naphthyl methacrylate, styrene, *α*-methylstyrene and vinyl toluene is preferred.

In addition, a copolymer obtained by copolymerizing at least two monomers of the monomer group consisting of methyl methacrylate, benzyl methacrylate, phenyl methacrylate, cyclohexyl methacrylate, chlorobenzyl methacrylate, 1-phenylethyl methacrylate, 1,2-diphenylethyl methacrylate, diphenylethyl methacrylate, furfuryl methacrylate, 1-phenylcyclohexyl methacrylate, pentachlorophenyl methacrylate, pentabromophenyl methacrylate, 1-naphthyl methacrylate, 2-naphthyl methacrylate, styrene, *α*-methylstyrene and vinyl toluene is also suitable. For the polymerization, commonly-used polymerization initiator and molecular weight modifier may be added as well.

### <Clad Substrate>

As the clad substrate, a polymer obtained by polymerizing or copolymerizing at least one monomer of the monomer group consisting of methyl methacrylate, ethyl methacrylate, butyl methacrylate, propyl methacrylate, cyclohexyl methacrylate, methyl acrylate, ethyl acrylate, propyl acrylate and butyl acrylate is suitable. Particularly, a polymer of methyl methacrylate or a copolymer of methyl methacrylate and other monomer is desirable. Methyl methacrylate is advantageous in terms of the ease of handling since it is highly transparent and readily polymerized. For the polymerization, commonly-used polymerization initiator and molecular weight modifier may be added as well.

### <Outer Clad Substrate>

As the outer clad substrate, any commercially available substrate may be used as long as it has a refractive index lower than that of the above-described clad substrate. Specifically, a polymer obtained by polymerizing or copolymerizing at least one monomer of the monomer group consisting of methyl methacrylate, 2,2,2-trifluoroethyl methacrylate, 2,2,3,3-tetrafluoropropyl methacrylate, 2,2,3,3,3-pentafluoropropyl methacrylate, 2,2,3,4,4,4-hexafluorobutyl methacrylate, 2,2,3,3,4,4,5,5-octafluoropentyl methacrylate, methyl *α*-fluoroacrylate and methyl 2-(trifluoromethyl)propenoate, and a mixture of the above-described polymer and a polyvinylidene fluoride are suitable. Particularly, a mixture of 2,2,2-trifluoroethyl methacrylate polymer and a polyvinylidene fluoride is desirable.

### <Fluorescent Agent>

The fluorescent agent is selected from those which contain plural aromatic rings and have a resonant structure. Representative examples of such fluorescent agents include 2-(4-*t*-butylphenyl)-5-(4-biphenyl)-1,3,4-oxadiazole (b-PBD), 2-(4-biphenyl)-5-phenyl-1,3,4-oxadiazole (PBD), *p*-terphenyl (PTP), *p*-quarter phenyl (PQP), 2,5-diphenyl oxazole (PPO), 4,4'-bis-(2,5-dimethylstyryl)-diphenyl (BDB), 2,5-bis-(5-*t*-butyl-benzoxazoyl)thiophene (BBOT), 1,4-bis-(2-(5-phenyloxazolyl))benzene (POPOP), 1,4-bis-(4-methyl-5-phenyl-2-oxazolyl)benzene (DMPOPOP), 1,4-diphenyl-1,3-butadiene (DPB), 1,6-diphenyl-1,3,5-hexatriene (DPH), 1-phenyl-3-(2,4,6-trimethylphenyl)-2-pyrazoline (PMP), and 3-hydroxyflavone (3HF).

One of the roles of the fluorescent agent is to absorb ultraviolet fluorescence emitted by the core substrate, convert it into a light having a longer wavelength, and emit the thus converted light. Accordingly, the fluorescent agent is desirably one which shows absorption of light in the vicinity of the emission wavelength of the core substrate. Among the above-exemplified fluorescent agents, examples of such fluorescent agents include b-PBD, PTP, and PQP. Any of these fluorescent agents is hereinafter referred to as "first fluorescent agent" for convenience. It is preferred that the first fluorescent agent absorb light having a wavelength of 250 to 350 nm and emit a light having a wavelength of 300 to 400 nm.

The emission wavelength of the first fluorescent agent is often shorter than about 430 nm, which is generally a wavelength giving an optimum lightreceiving sensitivity of a detector; therefore, the emission wavelength is preferably further converted into a longer wavelength, and a fluorescent agent which converts the light emitted by the first fluorescent agent into a light having a longer wavelength is added in some cases. Such a fluorescent agent is hereinafter referred to as "second fluorescent agent" for convenience. Among the above-exemplified fluorescent agents, examples of the second fluorescent agent include BBOT, BDB and POPOP. It is preferred that second fluorescent agent absorb light having a wavelength of 300 to 400 nm and emit a light having a wavelength of 350 to 600 nm.

The amount of the first fluorescent agent to be added is preferably 0.5 to 3.0% by mass, more preferably 0.8 to 2.0% by mass, with respect to the core substrate. The reason for such a relatively high concentration is because shortwavelength scintillating light emitted from the core substrate must be converted into a light of a longer wavelength within a short distance from the light emission position without being absorbed by the core substrate itself. When the first fluorescent agent is added in a small amount, since the initial wavelength conversion efficiency is deteriorated, the ultimate light-emitting performance cannot be ensured. On the other hand, an addition of the first fluorescent agent in an excessively large amount not only makes it difficult to dissolve the fluorescent agent into the core substrate and leads to an increase in the cost, but also may cause the transmission loss to be aggravated due to, for example, the effect of impurities contained in the fluorescent agent.

Further, the amount of the second fluorescent agent to be added is preferably 0.01 to 0.5% by mass, more preferably 0.02 to 0.3% by mass, with respect to the core substrate. When this amount is excessively small, the second fluorescent agent cannot efficiently absorb the light converted by the first fluorescent agent to convert it into a light of a longer wavelength. On the other hand, an addition of the second fluorescent agent in an excessively large amount not only leads to an increase in the cost, but also may cause the transmission loss to be aggravated due to the loss of light absorption by the fluorescent agent itself.

For example, PMP and 3HF may be used by themselves since they have an absorption wavelength (250 to 350 nm) and an emission wavelength (350 to 600 nm) that are apart from each other and thus satisfy the properties of both the first and the second fluorescent agents. The amount thereof to be added is preferably 0.01 to 3% by mass, more preferably 0.05 to 1% by mass, with respect to the core substrate. When this amount is excessively large, the transmission loss is aggravated due to self-absorption, whereas when the amount is excessively small, the light emission amount may be reduced.

### <Fiber Production Method>

A method of producing a scintillating fiber is not particularly restricted. For example, a rod drawing method, in which a preform rod is prepared by inserting a rod-shaped transparent polymer for a core composed of a highrefractive-index substrate (core rod) into a cylindrical transparent polymer for a clad composed of a low-refractive-index substrate (clad pipe) and a tip of the preform rod is subsequently heated and thereby finely drawn, can be employed.

### <Method of Producing Core Rod>

The core rod can be produced by placing monomers in a cylindrical polymerization vessel and performing thermal polymerization of the monomers. As a polymerization method, spontaneous polymerization induced by heat alone without an addition of an initiator is preferred; however, a minimum amount of a thermally-cleavable radical initiator may be added as well. In addition, a photocleavable radical initiator may be used in combination. Moreover, when the molecular weight of the core rod is excessively low, the mechanical strength and the reliability as an optical fiber cannot be ensured in some cases. Meanwhile, when the molecular weight is excessively high, since the core rod has a high melt viscosity, it is necessary to increase the heating temperature, and this may cause problems such as coloration due to thermal degradation and thermal decomposition. Therefore, a molecular weight modifier may also be added as required.

For example, for the production of the scintillating fiber illustrated in Fig. 1 or 2 in which the concentration distribution of a fluorescent agent is discontinuous, plural different rods and pipes, such as rods having a low fluorescent agent concentration and a small diameter and pipes having a high fluorescent agent concentration and a large diameter, are polymerized and subsequently combined to obtain a core rod.

Alternatively, as disclosed in Patent Literature 3, a monomer continuous injection method in which, with monomers being continuously injected into a rotating cylindrical vessel, the monomers are polymerized and solidified while allowing a hollow part to be formed by pressing the monomers against the side surface with a centrifugal force in the vessel, may be employed as well. In those cases according to the present invention where, for example, the fluorescent agent concentration is allowed to vary intermittently or continuously as illustrated in Fig. 3, this monomer continuous injection method is employed.

### <Method of Producing Clad Pipe>

The clad pipe can be produced by a method of loading a thermoplastic resin pellet to a melt extruder equipped with a circular die and extrusion-molding the pellet into a pipe shape. Alternatively, a method of polymerizing and solidifying monomers in a rotating cylindrical vessel while allowing a hollow part to be formed by pressing the monomers against the side surface with a centrifugal force may be employed. Moreover, a method of forming a hollow part by making a hole in an axial central part of a rod-shaped polymer using a drill or the like may be employed as well.

### Examples

The present invention will now be described in more detail by way of Examples thereof; however, the present invention is not restricted by the following Examples.

### <Example 1>

### [Core Rod]

A core rod was prepared by a monomer continuous injection method. Specifically, styrene monomers were polymerized while injecting the monomers into a rotating cylindrical vessel having an inner diameter of 70 mm such that a fluorescent agent p-terphenyl (PTP) was incorporated as a first fluorescent agent at a constant concentration of 1.0% by mass and 2,5-bis-(5-t-butylbenzoxazoyl)thiophene (BBOT) was incorporated as a second fluorescent agent at a continuously varying concentration of 0.035% by mass in an outer peripheral part and 0.005% by mass in a central part. The resultant was subsequently taken out of the cylindrical vessel to obtain a hollow rod for core, which was made of a polystyrene and had an outer diameter of 70 mm and an inner diameter of about 10 mm. This polystyrene-made hollow core rod had a refractive index of 1.59 at 25°C.

### [Clad Pipe]

To methyl methacrylate monomers, polymerization initiators (PEROCTA O (registered trademark, PO-O) manufactured by NOF Corporation: 0.05% by mass, and PERHEXA V (registered trademark, PH-V) manufactured by NOF Corporation: 0.05% by mass) and a chain transfer agent for adjusting the molecular weight, *n*-octylmercaptan (*n*-OM: 0.25% by mass), were added. The resultant was loaded to a cylindrical vessel of 75 mm in inner diameter and thermally polymerized at 70 to 120°C while being rotated about the axial center in a heat medium, whereby a clad pipe, which was made of a polymethyl methacrylate (PMMA) and had an outer diameter of 75 mm and an inner diameter of 71 mm, was obtained. This PMMA-made clad pipe had a refractive index of 1.49 at 25°C.

### [Preparation of Preform and Thermal Drawing]

The thus obtained polystyrene-made hollow core rod and PMMA-made clad pipe were combined to prepare a preform. This preform was thermally drawn while reducing the pressure in the center of the hollow core rod and the gaps between the hollow core rod and the clad pipe, whereby a scintillating fiber of 1 mm in outer diameter was obtained. The thus obtained scintillating fiber had a core diameter of 940 µm and a clad thickness of about 30 µm.

### <Example 2>

A core rod and a clad pipe were prepared in the same manner as in Example 1, and this clad pipe was used as an inner clad pipe.

### [Outer Clad Pipe]

To 2,2,2-trifluoroethyl methacrylate (3FMA) monomers, polymerization initiators (PO-O: 0.05% by mass, PH-V: 0.05% by mass) and a chain transfer agent for adjusting the molecular weight, *n*-octylmercaptan (*n*-OM: 0.025% by mass), were added. The resultant was loaded to a cylindrical vessel of 80 mm in inner diameter and thermally polymerized while being rotated about the axial center in a heat medium, whereby an outer clad pipe, which was made of a polytrifluoroethyl methacrylate and had an outer diameter of 80 mm and an inner diameter of 76 mm, was obtained. This polytrifluoroethyl methacrylate-made outer clad pipe had a refractive index of 1.42 at 25°C.

### [Preparation of Preform and Thermal Drawing]

The polystyrene-made core rod, the PMMA-made inner clad pipe and the polytrifluoroethyl methacrylate-made outer clad pipe were combined to prepare a preform. This preform was thermally drawn while reducing the pressure in the center of the hollow core rod, the gaps between the hollow core rod and the inner clad pipe and the gaps between the inner clad pipe and the outer clad pipe, whereby a scintillating fiber of 1 mm in outer diameter was obtained. The thus obtained scintillating fiber had a core diameter of 900 µm and a clad thickness of about 50 µm.

### <Comparative Example>

### [Core Rod]

In styrene monomers, 1% by mass of a fluorescent agent *p*-terphenyl (PTP) and 0.02% by mass of another fluorescent agent 2,5-bis-(5-*t*-butyl-benzoxazoyl)thiophene (BBOT) were uniformly dissolved, and the resulting solution was placed in a cylindrical vessel of 70 mm in inner diameter and thermally polymerized with the temperature being adjusted at 70 to 120°C. The resultant was taken out of the cylindrical vessel to obtain a polystyrene-made core rod containing the fluorescent agents. This polystyrene-made core rod had a refractive index of 1.59 at 25°C.

### [Clad Pipe]

A PMMA-made clad pipe having an outer diameter of 75 mm and an inner diameter of 71 mm was obtained in the same manner as in Example 1. This PMMA-made clad pipe had a refractive index of 1.49 at 25°C.

### [Preparation of Preform and Thermal Drawing]

The thus obtained polystyrene-made core rod and PMMA-made clad pipe were combined to prepare a preform. This preform was thermally drawn to obtain a scintillating fiber of 1 mm in outer diameter. The thus obtained scintillating fiber had a core diameter of 940 µm and a clad thickness of about 30 µm.

### <Measurement of Concentration Distribution of Fluorescent Agent>

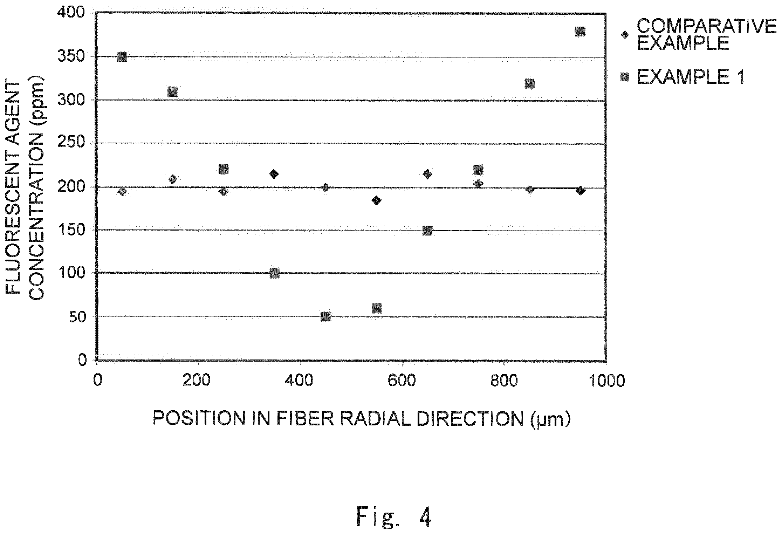

The core rods used in the production of the scintillating fibers according to Example 1 and Comparative Example were each partially cut, sampled along the radial direction, and then dissolved and diluted in a chloroform solvent, after which the absorbance of the fluorescent agent, 2,5-bis-(5-*t*-butyl-benzoxazoyl)thiophene (BBOT), was measured to determine the concentration distribution of the fluorescent agent. The results of measuring the concentration distribution of the fluorescent agent in terms of the diameter of each scintillating fiber after the drawing are shown in Fig. 4. Fig. 4 is a graph showing the concentration distribution of the fluorescent agent in the scintillating fibers according to Example 1 and Comparative Example. The abscissa indicates the position in the fiber radial direction (µm), while the ordinate indicates the fluorescent agent concentration (ppm). A position of about 500 µm in the fiber radial direction corresponds to the central part. As shown in Fig. 4, the concentration was substantially the same regardless of the position in the fiber radial direction in Comparative Example; however, in Example 1, the concentration of the fluorescent agent was distributed such that it continuously increased from the central part toward the outer peripheral part. In other words, the scintillating fiber according to Example 1 corresponds to the scintillating fiber illustrated in Fig. 3.

### <Measurement of Changes in Light Emission Amount>

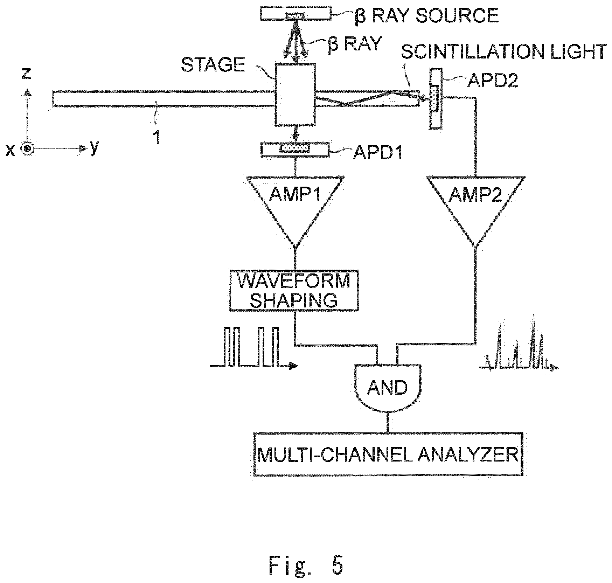

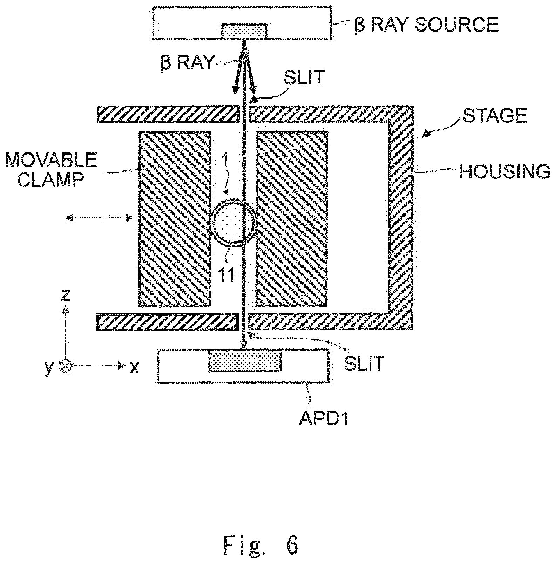

For the scintillating fibers of 1 mm in outer diameter according to Example 1 and Comparative Example, the changes in the light emission amount depending on the position in the fiber radial direction was measured. Fig. 5 is a block diagram of a measurement system for measuring the changes in the light emission amount depending on the position in the fiber radial direction. Fig. 6 is a cross-sectional view of a stage equipped with each scintillating fiber. It is noted here that, although the right-handed xyz coordinates illustrated in Figs. 5 and 6 correspond to each other between the figures, these coordinates are merely provided for convenience in describing the positional relationship of constituents. The positive direction along the z-axis is a vertically upward direction, and the x-y plane is a horizontal plane.

As illustrated in Fig. 5, the scintillating fiber 1 extending in the y-axis direction was mounted on the stage, and a (strontium 90)⁹⁰Sr-*β* ray was irradiated thereto downward in the vertical direction (in the negative direction along the z-axis) from the upper side of the stage. Then, the *β* ray passing through the scintillating fiber 1 was detected by an Si-APD (an optical detector APD1 for triggering) arranged on the lower side of the stage. Electrical signals output from the optical detector APD1 for triggering are amplified by an amplifier AMP1 and, after their waveforms are further shaped, the electrical signals are input to an AND-gate-AND.

It is noted here that, as illustrated in Fig. 6, the stage is constituted by a housing and a movable clamp housed in the housing. On each of a top panel and a bottom panel of the housing, a 100 µm-wide slit is formed at a position corresponding to each other. Only the *β* ray passing through the slit of the top panel is irradiated to the scintillating fiber 1, and only the *β* ray passing through the slit of the bottom panel is detected by the optical detector APD1 for triggering. In other words, only the *β* ray passing through both of the upper and lower slits of 100 µm in width enters the optical detector APD1 for triggering, as a result of which trigger signals are launched.

The changes in the light emission amount depending on the position in the fiber radial direction can be measured based on the trigger signals generated by the *β* ray restrictively irradiated at a width of 100 µm while moving the scintillating fiber 1 immobilized on the movable clamp in the x-axis direction.

Meanwhile, as illustrated in Fig. 5, a scintillating light generated in the scintillating fiber 1 by the *β* ray irradiation was detected using another Si-APD (an optical detector APD2 for scintillating light) arranged on one end of the scintillating fiber 1. Electrical signals output from the optical detector APD2 for scintillating light are amplified by an amplifier AMP2 and then input to the AND-gate-AND.

Pulses to be detected by the APD2 are generated in a large number by most of the *β* rays passing through the upper slit illustrated in Fig. 6. Among such pulses, only those from which a trigger signal was launched in the APD2 by the *β* rays passing through the lower slit are screened and counted by an AND gate.

The signals output from the AND-gate-AND are input to a multi-channel analyzer. In other words, the signals of the scintillating light detected by the optical detector APD2 for scintillating light are input to the multi-channel analyzer only when *β* ray was detected by the optical detector APD1 for triggering.

By this configuration, the emission amount of the scintillating light generated by the restrictive irradiation of *β* ray to a width of 100 µm of the fiber cross-section was measured using the multi-channel analyzer.

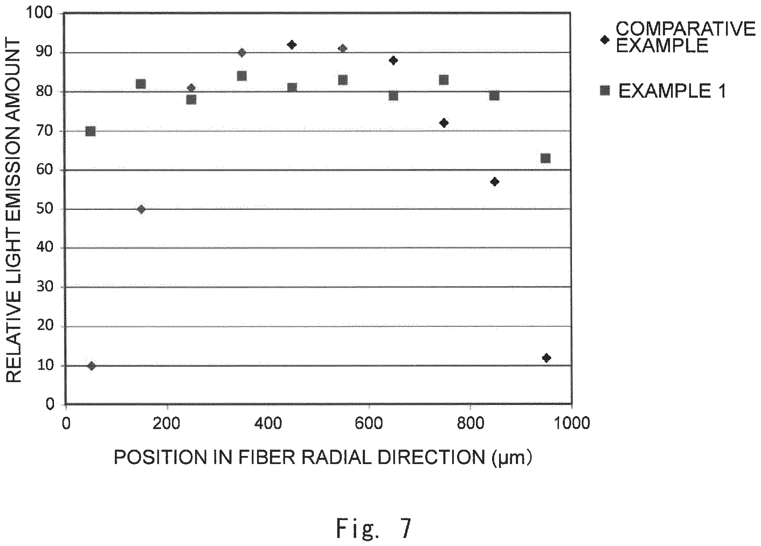

Fig. 7 is a graph showing the results of measuring the changes in the light emission amount depending on the position in the fiber radial direction. The abscissa indicates the position in the fiber radial direction (µm), while the ordinate indicates the relative light emission amount. A position of about 500 µm in the fiber radial direction corresponds to the central part.

As shown in Fig. 7, in Comparative Example, the light emission increased as the *β*-ray crossing position was moved closer to the central part (the position of about 500 µm in the fiber radial direction), and the light emission decreased as the *β*-ray crossing position was moved away from the center and closer to the outer peripheral part. In other words, in a single scintillating fiber, the light emission amount is different between a case where a radiation passes through a central part and a case where the radiation passes through an outer peripheral part, and the closer to the outer peripheral part, the lower is the detection sensitivity. Such variation in the light emission amount depending on the radiation crossing position is not preferred even in a single scintillating fiber. Particularly, in a detector in which scintillating fibers are used in an array as illustrated in Fig. 10, such variation poses a risk that an insensitive region may be formed in a part between the scintillating fibers, which is not preferred.

On the other hand, as shown in Fig. 7, in Example 1, the light emission amount was substantially the same regardless of the position in the fiber radial direction, and a high luminescence was maintained. In other words, although the scintillating fiber according to Example 1 had a circular cross-section, this scintillating fiber attained a uniform light emission amount regardless of the position in the fiber radial direction in the same manner as a scintillating fiber having a rectangular cross-section. Such suppression of a reduction in the light emission amount depending on the radiation crossing position is also preferred in a single scintillating fiber. Particularly, in a detector in which scintillating fibers are used in an array as illustrated in Fig. 10, the formation of an insensitive region in a part between the scintillating fibers can be suppressed, which is preferred.

The multi-clad-type scintillating fiber according to Example 2 had a fluorescent agent concentration distribution similar to that of Example 1 shown in Fig. 4, and this multi-clad-type scintillating fiber exhibited changes in the light emission amount similar to those of Example 1 shown in Fig. 7. In addition, the light emission amount of Example 2 was high at 35% on average as compared to the single clad-type scintillating fiber of Example 1.

As described above, Example 1 is a scintillating fiber having a continuously increasing distribution of fluorescent agent concentration as illustrated in Fig. 3, and similar effects can be attained also for scintillating fibers having such a discontinuously increasing distribution of fluorescent agent concentration as illustrated in Fig. 1 or 2.

This patent application claims priority based on Japanese Patent Application No. 2016-243732 filed on December 15, 2016.

### Reference Signs List

- 1: SCINTILLATING FIBER
- 11: CORE
- 12: CLAD

## Claims

1. A method of producing a plastic scintillating fiber (1) that comprises a core (11) that contains a fluorescent agent having ultraviolet absorption and luminescence properties and a clad (12) that covers an outer peripheral surface of the core (11), the method comprising:
preparing a preform by inserting a rod-shaped core rod, which is composed of a resin that contains the fluorescent agent having ultraviolet absorption and luminescence properties, into a cylindrical clad pipe composed of a resin having a lower refractive index than that of the core rod; and
drawing the preform while heating,
wherein a concentration of the fluorescent agent in the core rod is distributed such that it increases from a center toward an outer periphery in a cross-section of the core rod,
wherein the concentration of the fluorescent agent is distributed such that it increases discontinuously in two or more steps from the center toward the outer periphery in the cross-section of the core rod, and **characterized in that** the core rod is obtained by polymerization of a rod having a lower fluorescent agent concentration and a smaller diameter and a pipe having a higher fluorescent agent concentration and a larger diameter and subsequently combining the rod and the pipe.

2. A method of producing a plastic scintillating fiber (1) that comprises a core (11) that contains a fluorescent agent having ultraviolet absorption and luminescence properties and a clad (12) that covers an outer peripheral surface of the core (11), the method comprising:
preparing a preform by inserting a rod-shaped core rod, which is composed of a resin that contains the fluorescent agent having ultraviolet absorption and luminescence properties, into a cylindrical clad pipe composed of a resin having a lower refractive index than that of the core rod; and
drawing the preform while heating,
wherein a concentration of the fluorescent agent in the core rod is distributed such that it increases from a center toward an outer periphery in a cross-section of the core rod, wherein the concentration of the fluorescent agent is distributed such that it increases continuously from the center toward the outer periphery in the cross-section of the core rod, and
**characterized in that** the core rod is obtained by continuously injecting monomers into a rotating cylindrical vessel, polymerizing and solidifying the monomers while allowing a hollow part to be formed by pressing the monomers against the side surface with a centrifugal force in the vessel.

3. The method of producing a plastic scintillating fiber (1) according to Claims 1 or 2, wherein the clad pipe is constituted by:
an inner clad pipe; and
an outer clad pipe that covers an outer peripheral surface of the inner clad pipe and is composed of a resin having a lower refractive index than that of the inner clad pipe.

## Patentansprüche

1. Verfahren zur Herstellung einer Kunststoff-Szintillationsfaser (1), die einen Kern (11), der ein fluoreszierendes Mittel mit Ultraviolettabsorptions- und Lumineszenzeigenschaften enthält, und einen Mantel (12), der eine äußere Umfangsfläche des Kerns (11) bedeckt, umfasst, das Verfahren umfassend:
das Bereitstellen einer Vorform durch Einsetzen eines stabförmigen Kernstabs, der aus einem Harz zusammengesetzt ist, das das fluoreszierende Mittel mit Ultraviolettabsorptions- und Lumineszenzeigenschaften enthält, in ein zylindrisches Mantelrohr, das aus einem Harz mit einem niedrigeren Brechungsindex als dem des Kernstabs zusammengesetzt ist; und
das Ziehen der Vorform unter Erwärmung,
wobei eine Konzentration des fluoreszierenden Mittels in dem Kernstab so verteilt ist, dass sie in einem Querschnitt des Kernstabs von einem Zentrum zu einem äußeren Rand hin zunimmt,
wobei die Konzentration des fluoreszierenden Mittels so verteilt ist, dass sie in dem Querschnitt des Kernstabs diskontinuierlich in zwei oder mehr Schritten von dem Zentrum zu dem äußeren Rand hin zunimmt, und **dadurch gekennzeichnet, dass** der Kernstab durch Polymerisation eines Stabs mit einer niedrigeren Konzentration des fluoreszierenden Mittels und einem kleineren Durchmesser und eines Rohrs mit einer höheren Konzentration des fluoreszierenden Mittels und einem größeren Durchmesser und der anschließenden Kombination des Stabs und des Rohrs erhalten wird.

2. Verfahren zur Herstellung einer Kunststoff-Szintillationsfaser (1), die einen Kern (11), der ein fluoreszierendes Mittel mit Ultraviolettabsorptions- und Lumineszenzeigenschaften enthält, und einen Mantel (12), der eine äußere Umfangsfläche des Kerns (11) bedeckt, umfasst, das Verfahren umfassend:
das Bereitstellen einer Vorform durch Einsetzen eines stabförmigen Kernstabs, der aus einem Harz zusammengesetzt ist, das das fluoreszierende Mittel mit Ultraviolettabsorptions- und Lumineszenzeigenschaften enthält, in ein zylindrisches Mantelrohr, das aus einem Harz mit einem niedrigeren Brechungsindex als dem des Kernstabs zusammengesetzt ist; und
das Ziehen der Vorform unter Erwärmung,
wobei eine Konzentration des fluoreszierenden Mittels in dem Kernstab so verteilt ist, dass sie in einem Querschnitt des Kernstabs von einem Zentrum zu einem äußeren Rand hin zunimmt, wobei die Konzentration des fluoreszierenden Mittels so verteilt ist, dass sie in dem Querschnitt des Kernstabs kontinuierlich von dem Zentrum zu dem äußeren Rand hin zunimmt, und
**dadurch gekennzeichnet, dass** der Kernstab durch kontinuierliches Einspritzen von Monomeren in ein rotierendes zylindrisches Gefäß, Polymerisieren und Verfestigen der Monomere erhalten wird, während ein hohles Teil durch Pressen der Monomere gegen die Seitenfläche mit einer Zentrifugalkraft in dem Gefäß gebildet wird.

3. Verfahren zur Herstellung einer Kunststoff-Szintillationsfaser (1) nach Anspruch 1 oder 2, wobei das Mantelrohr gebildet wird durch:
ein inneres Mantelrohr; und
ein äußeres Mantelrohr, das eine äußere Umfangsfläche des inneren Mantelrohrs bedeckt und aus einem Harz mit einem niedrigeren Brechungsindex als dem des inneren Mantelrohrs zusammengesetzt ist.

## Revendications

1. Procédé de production d'une fibre scintillante en plastique (1) qui comprend un coeur (11) qui contient un agent fluorescent ayant des propriétés d'absorption ultraviolette et de luminescence, et une gaine (12) qui recouvre une surface périphérique externe du coeur (11), le procédé comprenant :
préparer une préforme en insérant une tige de coeur en forme de tige, qui est composée d'une résine qui contient l'agent fluorescent ayant des propriétés d'absorption ultraviolette et de luminescence, dans un tuyau de gaine cylindrique composé d'une résine ayant un indice de réfraction inférieur à celui de la tige de coeur ; et
étirer la préforme tout en chauffant,
dans lequel une concentration en l'agent fluorescent dans la tige de coeur est distribuée de sorte qu'elle augmente d'un centre vers une périphérie externe dans une section transversale de la tige de coeur,
dans lequel la concentration en l'agent fluorescent est distribuée de sorte qu'elle augmente de manière discontinue en deux étapes ou plus du centre vers la périphérie externe dans la section transversale de la tige de coeur, et **caractérisé en ce que**
la tige de coeur est obtenue par polymérisation d'une tige ayant une concentration en agent fluorescent inférieure et un diamètre inférieur, et d'un tuyau ayant une concentration en agent fluorescent supérieure et un diamètre supérieur, et en combinant ensuite la tige et le tuyau.

2. Procédé de production d'une fibre scintillante en plastique (1) qui comprend un coeur (11) qui contient un agent fluorescent ayant des propriétés d'absorption ultraviolette et de luminescence, et une gaine (12) qui recouvre une surface périphérique externe du coeur (11), le procédé comprenant :
préparer une préforme en insérant une tige de coeur en forme de tige, qui est composée d'une résine qui contient l'agent fluorescent ayant des propriétés d'absorption ultraviolette et de luminescence, dans un tuyau de gaine cylindrique composé d'une résine ayant un indice de réfraction inférieur à celui de la tige de coeur ; et
étirer la préforme tout en chauffant,
dans lequel une concentration en l'agent fluorescent dans la tige de coeur est distribuée de sorte qu'elle augmente d'un centre vers une périphérie externe dans une section transversale de la tige de coeur, dans lequel la concentration en l'agent fluorescent est distribuée de sorte qu'elle augmente de manière continue du centre vers la périphérie externe dans la section transversale de la tige de coeur, et
**caractérisé en ce que**
la tige de coeur est obtenue en injectant en continu des monomères dans un récipient cylindrique rotatif, polymérisant et solidifiant les monomères tout en permettant à une partie creuse d'être formée en pressant les monomères contre la surface latérale avec une force centrifuge dans le récipient.

3. Procédé de production d'une fibre scintillante en plastique (1) selon la revendication 1 ou 2, dans lequel le tuyau de gaine est constitué de :
un tuyau de gaine interne ; et
un tuyau de gaine externe qui recouvre une surface périphérique externe du tuyau de gaine interne et est composé d'une résine ayant un indice de réfraction inférieur à celui du tuyau de gaine interne.
